# EUROPEAN PATENT APPLICATION

(11) **EP 0 898 407 A2**
(43) Date of publication of application: **24.02.1999**
(21) Application number: 98306388.4
(22) Date of filing: 11.08.1998
(51) Int. Cl.: H04M 3/42, H04M 11/02, H04M 3/02, H04M 3/50

(54) **Caller id automated paging**

(30) Priority: 21.08.1997 US 915780
(71) Applicant: LUCENT TECHNOLOGIES INC., Murray Hill, New Jersey 07974-0636 (US)
(72) Inventor: Kaufman, Steven B., Emmaus, Pennsylvania 18049 (US)
(74) Representative: Watts, Christopher Malcolm Kelway, Dr.

(57) **Abstract**

According to the invention, a telephone call handling device includes a decoder (111) adapted to decode call related information received with an incoming call, and a calling unit (113) adapted to call a paging number with a message based on the call related information. In an alternative embodiment, a method of handling an incoming call includes counting the number of ring signals in the incoming call in a ring detector (115), decoding call related information from the incoming call, and selectively calling a paging number with a message based on the call related information if the number of rings counted in the counting step exceeds a predetermined threshold.

## Description

### Technical Field of the Invention

This invention is related to a method and apparatus for providing a paging signal upon the receipt of a telephone call. More particularly, this invention relates to a method and apparatus for forwarding a paging signal based on call related information.

### Background of the Invention

Some telephones and telephone systems provide call related information in conjunction with the establishment of a telephone call connection. For example, some consumer telephones support a Caller ID feature which provides an identification of a calling party. Caller ID information typically includes the telephone number and area code of the calling party and the time and date of the call. Other information, such as a name associated with the calling party, may also be supplied. Caller ID information is typically made available on a display device located proximate to, or incorporated into, the telephone associated with the called party. There are two different physical conditions during which caller ID information can be sent to a telephone. During a first condition, referred to as Type I caller ID, the called telephone is not in use and is in an on-hook state. In this case, the caller ID data is sent as an encoded signal between the first and second rings. During a second condition, referred to as Type II caller ID, and also known as caller ID with call waiting, the called telephone is in use and normal voice conversation is interrupted to send the caller ID data.

In a non-consumer environment, such as an office building, call related information may be provided to the called party by an intermediate machine, such as a central switch. The information provided by the central switch may be identical to that provided as caller ID information in the consumer environment. However, the central switch may be capable of providing additional information, or may discriminate between internal calls, for which additional information is provided, and external calls, for which limited information is provided or for which caller ID information is forwarded.

Telephone answering systems also appear in both a consumer-oriented implementation, such as a telephone answering machine, and a business-implementation, such as a "voicemail" system. These systems typically record a message from an incoming caller when an incoming call has not been answered within a predetermined number of rings. A telephone answering machine, which may be configured as a stand-alone unit or may be incorporated into a telephone, conventionally records a message in analog form onto a tape or in digital form through use of logic incorporated into a digital signal processor, a micrcontroller, or an application specific integrated circuit. The stored message is then available for operator playback by activating a playback function through, for example, pressing a button on the telephone answering machine, or by remotely activating the telephone answering machine through a predetermined signaling scheme.

In a non-consumer orientation, businesses typically incorporate telephone answering features into their telephone systems. One such feature, typically referred to as "voicemail," provides telephone answering functionality similar to that provided by the consumer-oriented telephone answering machine. A central switch or other intermediate machine stores and processes voicemail messages. Incoming calls that are not answered within a predetermined number of rings are typically handled by the intermediate machine to play a prerecorded greeting to an incoming caller and record a message from the incoming caller. A user of a telephone in such a voicemail system typically checks for messages by calling a special number, and, in response to queries from the intermediate machine, entering the user's extension number (or other identifier), and a personal identification number.

In the consumer-oriented telephone answering machine, and in the business-oriented voicemail system, the calling party has only two or three options. Generally, the calling party has a first option of leaving a message or a second option of not leaving a message and calling back at a later time. In addition, especially in the business environment, the calling party may have the option of pressing a specified key on the calling party's telephone to transfer to another party who works with the intended party. However, the telephone answering device does not provide a mechanism for the called party to be automatically alerted when an incoming caller is storing a message, or to selectively be alerted based on call specific parameters.

### Summary of the Invention

According to the invention, a telephone call handling device includes a decoder adapted to decode call related information received with an incoming call, and a calling unit adapted to call a paging number with a message based on the call related information so that the target party is alerted to the fact that a call has been received and is provided information relating to the incoming call.

In an alternative embodiment, a method of handling an incoming call includes counting the number of ring signals in the incoming call, decoding call related information associated with the incoming call, and selectively calling a paging number with a message based on the call related information if the number of rings counted in the counting step exceeds a predetermined threshold.

### Brief Description of the Drawings

Figure 1 is a simplified block diagram showing an example of a telephone answering device according to a first embodiment of the invention;
Figure 2 is a simplified block diagram showing a telephone answering device according to a second embodiment of the invention;
Figure 3 is a flowchart showing a method of handling an incoming call according to the invention;
Figure 4 is a flowchart showing an alternative method of handling an incoming call according to the invention; and
Figure 5 is a flowchart showing yet another method of handling an incoming call according to the invention.

### Detailed Description

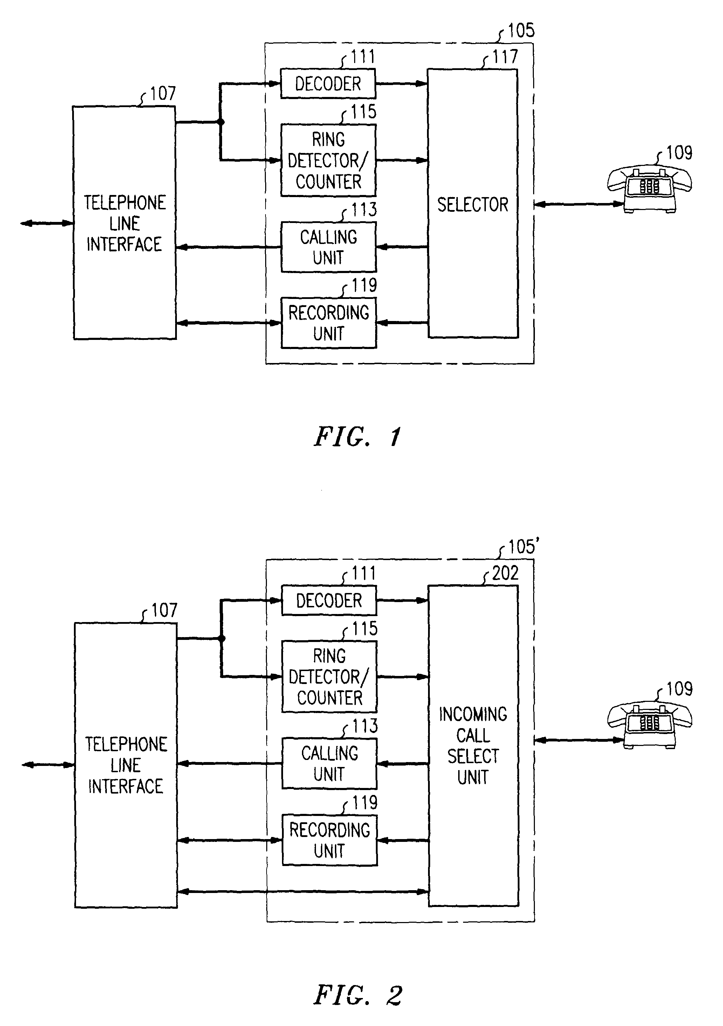

As shown in Figure 1, a telephone answering device 105 is coupled to a telephone line interface 107 and to a telephone 109. Telephone answering device 105 includes a decoder 111 and a calling unit 113. According to the invention, the decoder 111 decodes call related information, such as caller ID data, received with an incoming call, and calling unit 113 subsequently calls a paging number with a message based on at least some of the call related information.

In this example, telephone answering device 105 also includes a ring detector/counter 115, a selector 117, and a recording unit 119. The ring detector/counter 115 detects and counts ring signals associated with an incoming call and provides selector 117 with an indication that a threshold number of ring signals has been exceeded. Ring detector/counter 115 may also sense whether a switchhook associated with telephone 109 has been activated. Operationally, after ring detector/counter 115 determines that the threshold number of rings have occurred in the absence of switchhook activation, it enables selector 117 to compare at least some of the call related information received from decoder 111 to predetermined information such as, for example, a set of pre-approved call sources. If selector 117 determines based on this comparison that the source of the incoming call is one of the pre-approved call sources, then selector 117 enables calling unit 113 to place a subsequent call to a forwarding number, such as a number associated with a pager. Alternatively, if selector 117 determines that the call source is not one of the pre-approved call sources, selector 117 enables recording unit 119 to communicate with the calling party in a conventional manner. Recording unit 119 will subsequently cause a message to be sent to the calling party via telephone line interface 107 and will subsequently record information provided by the calling party on a tape or within a memory.

Decoder 111, calling unit 113, ring detector/counter 115, selector 117 and recording unit 119 may be incorporated into a digital signal processor, such as an integrated circuit digital signal processor and/or a micrcontroller, that controls a variety of other telephone answering device features in addition to those described herein with respect to the present invention. For example, the digital signal processor will enable a telephone call to be connected between telephone 109 and telephone line interface 107 if telephone 109 is answered prior to the ring detector/counter counting a number of rings corresponding to the threshold. Further, the DSP will also enable such a telephone call to take place if telephone 109 is answered while recording unit 119 is in the process of recording a message, or while calling unit 113 is in the process of placing a call to the forwarding number.

Advantageously, the forwarding number may correspond to a pager or pager service used by the party associated with telephone 109 (i.e., the "target party"). Thus, according to the invention, a telephone call to the telephone number of the target party, i.e., the telephone number associated with telephone 109, will result in a paging message to the target party containing call related information identifying the calling party or in some other way associated with the incoming call. Thus, the target party can be instantly alerted to the fact that a specific calling party is trying to contact the target party. The system can be configured to enable every incoming call that is not answered within a predetermined number of rings to generate a subsequent paging message to the target party's pager. Alternatively, the system can be configured to use selector 117 to screen incoming calls so that only previously selected call sources (i.e., "pre-approved" call sources) result in a paging signal, while all other call sources are handled in a "conventional" manner wherein the call source hears a message indicating that the target party is not available and is thus provided an opportunity to leave a message.

Alternatively, the system can also be configured to enable both the recording of a message and the sending of a paging signal to the target party. This feature can also be limited to specific predetermined call sources, and the call sources for which this feature is enabled need not correspond to the same call sources for which only the paging feature is enabled. When a call source is enabled for this feature, the target party will receive a page signal identifying the calling party. This page signal may also indicate that the calling party has left a message on the target party's telephone answering device 105 in recording unit 119. The target party may then retrieve the message stored in recording unit 119 according to conventional remote storage retrieval procedures.

In an alternative embodiment, selector 117 may serve an additional function of determining, if the incoming call is not answered within the threshold number of rings, whether it is a Type I situation or a Type II situation. In a Type I situation, telephone 109 is on-hook. In this situation, according to this embodiment, a paging call will be placed. In a Type II situation, on the other hand, telephone 109 is off-hook (i.e., is currently being used as part of a telephone call). In this situation, according to this embodiment, a paging call will not be placed since the fact that telephone 109 is off-hook presumptively implies that a user of telephone 109, such as the target party, is aware of the incoming call by way of conventional call waiting signaling methods, and is also aware of the caller ID data associated with the incoming call. Since the target party is aware of the incoming caller ID data, according to this embodiment, selector 117 enables calling unit 113 only in Type I situations, and may be further configured , as in the previous embodiment, to enable calling unit 113 only for specific pre-approved call sources.

The above-described discrimination between Type I situations and Type II situations can be selective. For example, a user of telephone 109, upon receiving an indication that a Type II Caller ID message is being received, can provide input to telephone 109 to cause selector 117 to enable or disable the paging feature for this incoming call. The ability to enable or disable the paging feature can be limited to users having knowledge of a personal identification number (PIN). Thus, for example, when a principal user of telephone 109 is presently engaged in a telephone conversation with a first party, and a second party is placing an incoming call, the principal user can enter a command and a PIN number to cause selector 117 to disable calling unit 113. When, however, a user other than the principal user (i.e., a user that does not know the PIN) is engaged in a telephone conversation at the time of an incoming call, the principal user will be alerted by way of a paging call, or will be alerted if the incoming call is from a pre-approved call source.

Figure 2 shows telephone answering device 105'. Here, telephone line interface 107, telephone 109, decoder 111, calling unit 113, ring detector/counter 115, and recording unit 119 are functionally equivalent to the corresponding devices shown in Figure 1 and therefore have like designations. Telephone answering device 105' also includes incoming call select unit 202. According to this embodiment, after ring detector/counter 115 determines that the threshold number of rings has been reached and telephone 109 has not been answered, incoming call select unit 202 provides a prompt, via telephone line interface 107, to the calling party informing the calling party that the calling party has an option of leaving a message and/or sending a page to the target party.

The calling party will respond to this prompt by, for example, pressing specified buttons on the calling party's telephone keypad to provide specified signals to incoming call select unit 202. In response to these signals corresponding to the choice selected by the calling party, incoming call select unit 202 enables calling unit 113 and/or recording unit 119. For example, if the calling party prefers to merely leave a message, then incoming call select unit 202 enables only recording unit 119. Alternatively, if the incoming caller prefers to page the target party, then incoming call select unit 202 enables calling unit 113. Further, if the incoming caller selects to both leave a message and provide a page, then incoming call select unit 202 will enable both calling unit 113 and recording unit 119.

Incoming call select unit 202 may also incorporate features of selector 117 (Figure 1). Thus, for example, incoming call select unit 202 can compare the call related information provided by decoder 111 with predetermined information corresponding to one or more pre-approved call sources that are approved by the target party for corresponding features, such as the feature of providing a page to the target party via calling unit 113. In this example, incoming call select unit 202 will first determine the features approved for the incoming caller prior to providing the prompt to the incoming caller. For example, if the incoming caller is not approved for sending a page to the target party, incoming call select unit 202 will not enable calling unit 113 and will enable recording unit 119. The calling party will thus be given the conventional option of leaving a message for the target party if the calling party chooses to do so. Similarly, incoming call select unit 202 can be configured to determine if it is a Type I or Type II situation, and only enable calling unit 113 if it is a Type I situation.

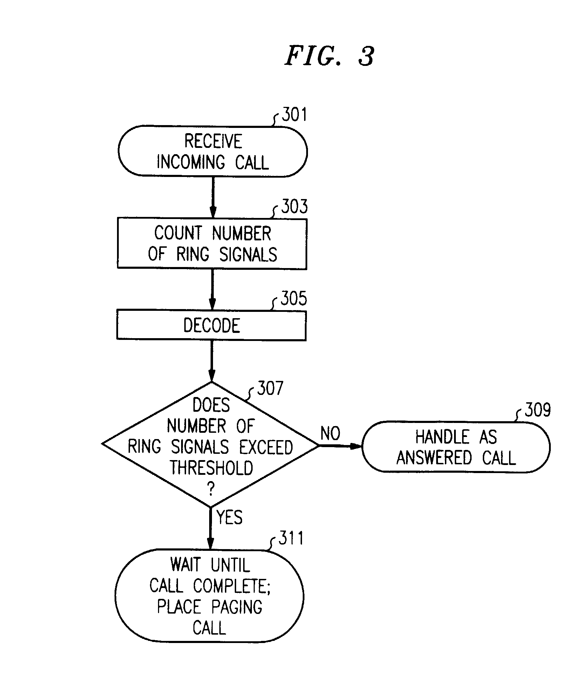

Figure 3 provides an operational flowchart of an example of a method of handling an incoming call according to the invention. At step 301, an incoming call is received via telephone interface 107. At step 303, ring detector/counter 115 counts a number or ring signals from the incoming call. At step 305, decoder 111 decodes call related information associated with the incoming call. It is understood, of course, that steps 303 and 305 can occur in parallel or in any order as decoder 111 and ring detector/counter 115 can be operating simultaneously. At step 307, ring detector/counter 115 determines if the number of ring signals exceeds the ring threshold. An example of a ring threshold is four rings. If the number of ring signals does not exceed four rings, indicating that a party has caused telephone 109 to transition into an off-hook state, then in step 309 the call is handled as an answered call. Alternatively, if the number of ring signals does exceed the threshold, then according to the first exemplary method, calling unit 113 will be enabled to place a paging call to a call forwarding number. In placing the paging call, calling unit 113 should wait until the present call is complete, such as, by waiting for an indication via telephone interface 107 that the calling party has returned to an on-hook state. At this time, telephone line interface 107 will be free to enable calling unit 113 to place the paging call to the target party.

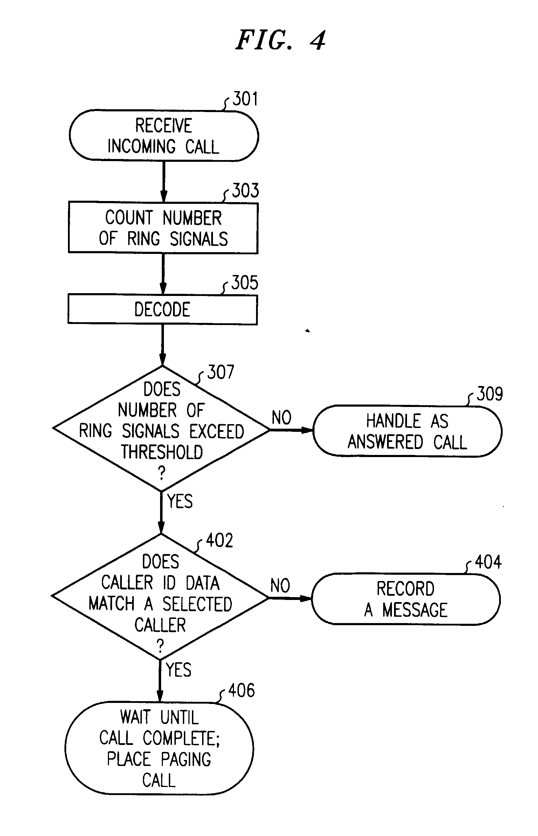

Figure 4 shows an alternative method of handling an incoming call according to the invention. Here, steps 301, 303, 305, 307 and 309 are equivalent to the like-numbered steps in Figure 3. In the method of Figure 4, however, if the number of ring signals exceeds the threshold in step 307, then at step 402 the selector 117 determines if the call related information decoded by decoder 111 matches a selected caller (i.e., a caller previously pre-approved by the target party). If the answer to the inquiry in step 402 is NO, then a message is recorded via recording unit 119 at step 404. The process of recording a message at step 404 can encompass, for example, recording unit 119 providing a prerecorded greeting to the calling party via telephone line interface 107, and the calling party subsequently providing a message to be stored on a tape or in a memory of recording unit 119.

If the answer to the inquiry at step 402 is that the call related information matches a selected caller, then at step 406 the calling unit 113 waits until the call is complete and then places a paging call to the target party.

In each of the above examples, the invention is described as placing a paging call to the target party. It is, of course, within the scope of the invention for the call to be other than a paging call. It is also within the scope of the invention for the paging call to be placed to more than one party or to different parties depending upon the identity of the calling party or some other variable within the call related information. For example, selector 117 can identify a first party to be paged when the call related information decoded by decoder 111 corresponds to a calling party identified in a first table, and can also identify a second party to be paged if the call related information corresponds to a calling party in a second table. The use of one table or two tables corresponding to one target party or two target parties is merely by way of example and not of limitation. Any number of target parties can be paged based upon the call related information decoded by decoder 111 and analyzed by selector 117.

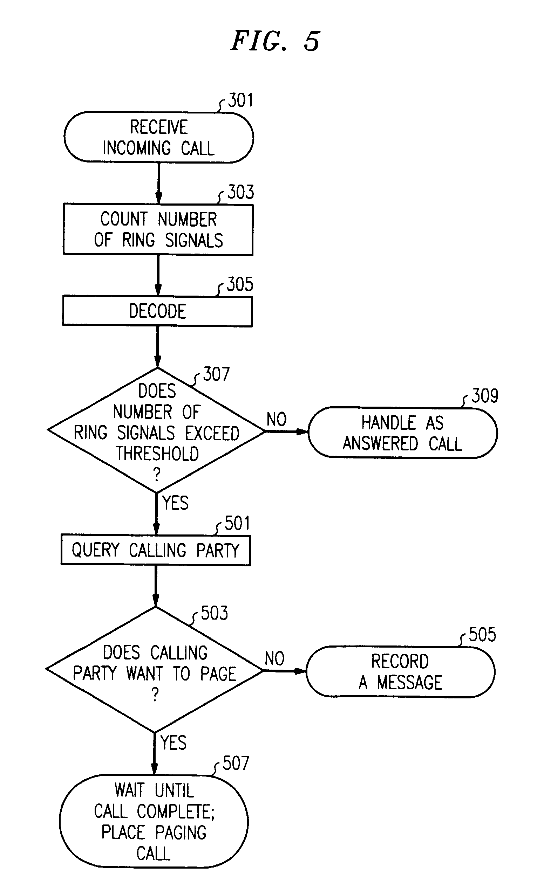

Figure 5 provides an example of yet another method of handling an incoming call according to the invention. Here, steps 301, 303, 305, 307 and 309 are equivalent to the like-numbered steps described with respect to the methods of Figure 3 and 4. In this example, incoming call select unit 202 (Figure 2) provides a query to the calling party at step 501 via the telephone line interface 107 if the number of ring signals is determined at step 307 to exceed the threshold. Incoming call select unit 202 then receives a response to a query and determines at step 503 if the calling party wants to page the target party. If the answer to this inquiry is NO, then at step 505 a message is recorded in a manner similar to that described above with respect to step 404. Alternatively, if the calling party does desire to send a page to the target party, then at step 507 the calling unit 113 waits until the call is complete and then places the paging call.

The paging call options described above with respect to Figure 4 also apply to the method of Figure 5. Further, the method of Figure 5 can also be modified to provide for a determination of the status of the incoming caller (i.e., whether the incoming caller is approved for paging), prior to issuing the query at step 501. It is also possible for the query at step 501 to be a specific query corresponding to the status of the calling party. Thus, for example, a first calling party that is approved for paging will get a first query at step 501 while a second calling party that is not approved for paging will get a second query. The first query, for example, will ask the calling party if the calling party desires to leave a message or to page the target party. The second query, for example, will merely ask the calling party to "leave a message after the beep," in a conventional manner. It is further possible to have calling parties that are pre-approved to both leave a message and page the target party. The query issued at step 501 would thus reflect this status.

Further, each of the methods of Figures 3-5 can be modified to include a step to determine if telephone 109 is off-hook, in a Type II situation, in which case only the conventional option of recording a message may be preferred, or in which case the user of telephone 109 can disable the calling unit upon entry, for example, of an appropriate PIN.

The aforementioned embodiments describe the invention primarily in the consumer environment, wherein the functionality of the invention is resident in a telephone or in a device proximate to the telephone. The principals of the invention, however, also extend to the business telephone environment, wherein the functionality of the invention is resident in an intermediate machine, such as a central switch. In such an environment, for example, a user of the voicemail system (i.e., someone with a voicemail box) administered by the intermediate machine can receive a paging call initiated by the intermediate machine upon the receipt of a voicemail message. This function can be enabled by the user for only pre-approved callers, so that the intermediate machine evaluates call related information, such as caller ID information, associated with the incoming call, and places a paging call when the call related information meets certain pre-approved parameters.

In the above embodiments, caller ID data is provided as an example of call related information upon which a decision is made regarding whether to send a paging call. Other parameters may be evaluated as part of a decision regarding whether to place a paging call. For example, a decision to place a paging call can be based on one or more of the time of day, the date, the area code, local exchange or country code of the incoming caller, or any other parameter.

## Claims

1. A telephone call handling device, comprising:
a decoder (111) adapted to decode call related information received with an incoming call; and
a calling unit (113) adapted to call a paging number with a message based on the call related information.

2. A telephone call handling device as recited in claim 1, wherein the message contains at least some of the call related information.

3. A telephone call handling device as recited in claim 1 or claim 2, wherein the call related information comprises caller identification data.

4. A telephone call handing device as recited in any of the preceding claims, further comprising a ring counter (115) adapted to count a number of ring signals in an incoming call and to enable the calling unit (113) based on the counted number of ring signals.

5. A telephone call handling device as recited in any of the preceding claims, further comprising a selector (117) adapted to compare the call related information decoded by the decoder with predetermined information, and to selectively enable the calling unit based on a result of the comparison.

6. A telephone call handling device as recited in claim 5, wherein the predetermined information comprises a data field corresponding to an approved parameter.

7. A telephone call handling device as recited in claim 5, wherein the predetermined information comprises a plurality of data fields each corresponding to an approved call source, and wherein the selector (117) is adapted to enable the calling unit (113) when the call related information identifies an approved call source.

8. A telephone call handling device as recited in any of the preceding claims, further comprising a selector (117) adapted to determine if a called telephone is in an on-hook state or an off-hook state. and to enable the calling unit only if the called telephone is in the on-hook state.

9. A telephone call handling device as recited in any of the preceding claims, further comprising an incoming call select unit (202) adapted to enable an incoming caller to selectively enable the calling unit (113).

10. A telephone call handling device as recited in claim 9, further comprising a recording unit (119), wherein the incoming call select unit (202) is further adapted to enable the incoming caller to selectively enable the recording unit (119).

11. A telephone call handling device as recited in any of the preceding claims wherein the telephone call handling device is incorporated into an answering machine, a telephone or an intermediate machine, for example a voicemail central switch.

12. A method of handling an incoming call, comprising the steps of:
counting a number of ring signals in the incoming call;
decoding call related information from the incoming call; and
selectively calling a paging number with a message based on the call related information if the number of rings counted in the counting step exceeds a predetermined threshold.

13. A method of handling an incoming call as recited in claim 12, wherein the selecting step includes incorporating at least some of the call related information into the message.

14. A method as recited in claim 12 or claim 13, wherein the call related information includes caller ID data.

15. A method of handling an incoming call as recited in any of claims 12 to 14, further comprising the step of comparing the call related information decoded in the decoding step with predetermined information, and wherein the selectively calling step is further influenced by a result of the comparing step.

16. A method of handling an incoming call as recited in any of claims 12 to 15, further comprising the steps of
providing a prompt to an incoming caller; and
receiving a response from the incoming caller,
wherein the selectively calling step is further influenced by the response from the incoming caller.
